# EUROPEAN PATENT SPECIFICATION

(11) **EP 3 090 175 B1**
(45) Date of publication and mention of the grant of the patent: **06.02.2019**
(21) Application number: 14868093.7
(22) Date of filing: 01.12.2014
(51) Int. Cl.: F04B 19/00, F28F 13/16, F04B 15/00

(54) **MICROFLUIDIC DEVICE**
MIKROFLUIDISCHE VORRICHTUNG
DISPOSITIF MICROFLUIDIQUE

(30) Priority: 04.12.2013 SE 1351440
(43) Date of publication of application: 09.11.2016
(73) Proprietor: APR Technologies AB, 745 39 Enköping (SE)
(72) Inventor: THORSLUND, Robert, S-195 65 Steningehöjden (SE); BJÖRNEKLETT, Are, S-723 55 Västerås (SE); NILSSON, Peter, 174 46 Sundbyberg (SE)
(74) Representative: AWA Sweden AB
(86) International application number: PCT/SE2014/051426
(87) International publication number: WO 2015/084238

(56) References cited:
- JP-A- 2008 295 114
- JP-A- 2012 057 872
- US-A- 5 964 997
- US-A- 5 964 997
- US-A1- 2004 155 612
- US-A1- 2008 060 794
- US-A1- 2009 321 056
- US-A1- 2009 321 056
- US-A1- 2010 052 540
- US-A1- 2010 155 025
- US-A1- 2011 139 408

## Description

### Field of the invention

The invention disclosed herein relates to devices for transporting fluids. More precisely, it relates to an electro-hydrodynamic device for controlling a fluid flow, as well as methods for manufacturing and controlling such device.

### Background of the invention

The performance of electronic systems is to a large extent limited by the available cooling techniques for keeping the electronics within an appropriate temperature range. Smaller electronic devices having improved performance are associated with increased heat dissipation over a relatively small area. In other words, there is a growing need for space and energy efficient cooling of electronic devices.

As an example, satellites, such as telecommunication satellites, are approaching the technology limits of existing on-board thermal management systems. The power dissipation of these satellites increases to meet the growing requirements for broadcasting, broadband multimedia and mobile communications services. Micro, nano, or 'cube' satellites, which require low-mass heat removal from electronic components (satellite on a chip) are likely to need more compact thermal management systems for maintaining a high performance.

Cooling is also a crucial factor in the design of other electronic devices having heat-generating components, such as power electronics, powerful processors, radio frequency amplifiers, lasers etc.

Bologa et al., "Multistage electrohydrodynamical pump", proceedings of the 2000 Conference on Electrical Insulation and Dielectric Phenomena*,* discloses a multistage electrohydrodynamical (EHD) pump with latticed electrodes of parallel wires embedded in a metal ring. According to Bologa et al., a formation of ions in a working medium, comprising a dielectric liquid, occurs at the emitter electrode, whereas the ions recombine at the collector. The ions move under the influence of Coulomb forces, which ions thereby entrain a flow of the working medium.

US 2008/0060794 (Neng Tyi Precision Industries Co., Ltd) discloses a heat sink device that has a metal body connected with a voltage source, multiple sharp teeth formed on one side of the metal body, and a metal grounded member provided separately from the metal body. When the metal body is electrified, the sharp teeth are in a strong electrical field to generate a corona phenomenon, and the air around the sharp teeth is ionized.

US 2004/0155612 (Krichtafovitch) discloses an electrostatic fluid accelerator includes an electrode array comprising an array of corona discharge electrodes and an array of accelerating electrodes for moving a fluid. A detector is configured to sense a constituent component of the fluid. A control circuit supplies power to the electrode array and operates the electrostatic fluid accelerator in response to an output from the detector.

Even though such EHD pump may be employed in various cooling applications, there is still a need for an improved device and method for controlling the flow of a fluid and for providing improved pumping efficiency. There is also a need for an improved manufacturing method of such devices.

### Summary of the invention

It is an object of the present invention to control the flow of a fluid in such manner that the efficiency of the transportation of the fluid is improved. It is a particular object to improve the capacity of an EHD pump for dielectric fluids.

Accordingly, the invention provides a device and a control method with the features of the independent claims. The dependent claims define advantageous embodiments.

In a first aspect, the device is characterised in a first electrode and a second electrode, wherein the second electrode is offset from the first electrode in a downstream direction of the flow and wherein the electrodes are connectable to a voltage source. The first electrode comprises bridges and joints forming a grid structure, which is arranged to allow the fluid to flow there through. According to this aspect, at least a portion of at least one of the bridges has a maximum height in a direction parallel to the direction of the flow, and a maximum gauge in a direction orthogonal to the direction of the flow, wherein the maximum height is larger than the maximum gauge, preferably at least twice the maximum gauge. The maximum height may also be three, four, five, or six times the maximum gauge, or larger.

In a second aspect, an assembly comprising a plurality of stacked devices according to the first aspect is provided. The assembly may e.g. be a pump assembly or fan assembly.

In a third aspect, the method for controlling the flow of a fluid is characterised in that a first electrode is provided, which comprises bridges and joints forming a grid structure arranged to allow the fluid to flow through the first electrode. At least a portion of at least one of the bridges has a maximum height in a direction parallel to the direction of the flow and a maximum gauge in a direction orthogonal to the direction of the flow, and wherein said maximum height is larger than the maximum gauge, preferably at least twice the maximum gauge. The maximum height may also be three, four, five, or six times the maximum gauge, or larger. Further, a second electrode is arranged offset from the first electrode in the direction of the flow, and an electric potential difference is applied to the first electrode and the second electrode so as to cause the fluid to flow through the first electrode.

In a fourth aspect, a method for controlling the flow of a fluid is provided. The method comprises providing a device according to the first aspect, providing a fluid contacting the first electrode of the device, and applying an electric potential difference between the first electrode and the second electrode.

By a grid it is understood any structure comprising bridges that are joined to each other so as to e.g. a grating, net, or honeycomb structure, etc. The bridges and the joints define open areas of the grid which admit a fluid flow. In one example, the grid may comprise flanges forming a heat sink. The flanges, which e.g. may be formed of sheet metal, may be arranged in a lamellar structure wherein their edge portions are joined to a peripheral frame of the grid. Further, it is understood that the grid may comprise several bridges having the above specified ratio between their height and gauge. As an example, the whole grid other than its peripheral portions may e.g. be formed of such bridges. In another example, most of or all of bridges of the grid may fulfill the maximum height/gauge relation.

Several advantages are associated with the invention. Firstly, by forming a grid of bridges that have a relatively large height in relation to their gauge, the grid may be relatively rigid in terms of its ability to carry loads in the height direction of the bridges, or the direction of the flow. Thereby, a relatively rigid electrode is enabled, which is less prone to bend or deform, especially in the direction of the flow, and hence the risk for e.g. short-circuiting of the device may be reduced. Further, the relatively rigid and stable grid may still have a relatively large open area which may provide a relatively low flow resistance being met by the fluid passing through the grid. Further, the relatively high and narrow bridges may reduce the amount of material required for forming a relatively stable and rigid grid, which may reduce both weight and cost of the device. By using a relatively rigid grid, the need for additional support structures may be reduced and a relatively well defined and constant spacing between the first and second electrodes may be achieved. The spacing may e.g. be within the range of 10-2000 µm, and more preferably in the range of 50-1000 µm.

With their relatively large height, the bridges also provide a relatively large contact surface between the grid structure and the passing fluid, which may facilitate any interactions between the electrode and the fluid, such as e.g. diffusion of material and/or injection of ions or electrons.

The distance, or spacing, between the first and the second electrode may be varied so as to control the strength of the electric field being induced between the electrodes. Experiments have shown that a smaller gap, and thus a stronger induced electric field, may enable increased pump efficiency, or flow rate, as compared to devices having a larger gap and being supplied with the same electric power.

According to an embodiment, at least one of the bridges of the first electrode comprises a tapered portion forming an edge or tip that is directed towards the second electrode. The present embodiment is based on the insight that by providing the first electrode with beaked or pointed portions, the injection of electrons per unit area of the first electrode into the fluid may be improved. Increasing the emitting of electrons may enhance the electrohydrodynamic effect, increase the flow through the device, and thus improve its pumping efficiency. Further, increasing the electron emitting efficiency from the first electrode may advantageously allow for a reduction of the flow resistance through the grid, since the open area of the grid, i.e. the grid area through which the fluid may pass, may be reduced without necessarily reducing the injected current.

According to an embodiment, at least one of the bridges comprises a tapered portion forming an edge or tip directed away from the second electrode. In other words, the tapered portion is directed anti-parallel to the flow of the fluid, which advantageously may streamline the upstream portion of the grid so as to reduce the flow resistance and enhance the efficiency of the device.

According to an embodiment, the second electrode comprises bridges and joints forming a grid structure that allows the fluid to flow through the second electrode. At least one of the bridges comprises a portion having a maximum height in a direction parallel to the direction of the flow and a maximum gauge in a direction orthogonal to the direction of the flow, wherein the maximum height is larger than the maximum gauge, preferably at least twice the maximum gauge. The present embodiment is associated with similar advantages and effects as described with reference to the structure of the grid of the first electrode.

According to an embodiment, the second electrode comprises a structured surface portion facing the first electrode. The structured surface portion may comprise micro- and/or nanostructures which may increase the area of the surface portion. The microstructures and/or nanostructures may for example include the geometrical form of hills, ridges, paraboloids, pillars, or trenches. Increasing surface area of the second electrode is advantageous in that it may improve the ability of collecting, or absorbing, electrons and hence improve the efficiency of the electrode. Further, by increasing the surface area by means of micro- and /or nanostructures, a relatively higher active surface area can be achieved on a relatively small surface portion. This advantageously allows for a relatively larger active surface area and a relatively lower flow resistance. A relatively larger active area may also increase the lifetime of the second electrode, since it may then be less sensitive to contaminants passivating the surface.

According to an embodiment, the second electrode comprises a concave surface portion facing the first electrode. A concave surface portion is advantageous in that it may provide an increased surface area as compared to a flat surface portion, thereby enhancing the ability to collect electrons, e.g., electrons emitted by the first electrode. The concave surface may e.g. conform to an arc of a circle, or a surface of a sphere or of a cylinder, having its centre or symmetry axis at an edge or tip of the first electrode. Thereby, a homogenous electric field may be achieved between the first electrode and the second electrode.

According to an embodiment, at least one of the bridges and/or joints of the second electrode comprises a channel, or a plurality of channels, adapted to allow the fluid to flow through said channel. By arranging a passage through the material of the grid, the flow may be increased and/or the fluid resistance reduced.

According to an embodiment, the device comprises a support structure arranged to separate the second electrode from the first electrode in the direction of the flow. The support structure may e.g. be electrically nonconductive and have a well defined thickness so as to maintain a desired spacing between the first and second electrodes. The support structure may e.g. be formed as a grid or a spacer comprising e.g. ceramics or polymers, and the first and/or second electrode(s) may be connected to or arranged on the support structure by means of e.g. welding, gluing, soldering, brazing, glazing or sintering. The support structure may comprise an alignment structure adapted to align the first electrode with the second electrode, and/or to align several stacked device with each other. The alignment structure may e.g. comprise a protruding member and a receiving member, such as a depression or recess, wherein the protruding member is adapted to cooperate with a corresponding receiving member of another support structure, and vice versa. Thereby the assemblage and alignment of the electrodes and/or the device may be facilitated.

According to further embodiments, at least one of the first electrode, the second electrode and the support structure comprises a deformation structure arranged to compensate for, or absorb, e.g. thermally induced stresses, particularly in a plane orthogonal to the direction of the fluid flow. The deformation structure may e.g. be formed by a bridge being curved in the plane orthogonal to the direction of the flow. As the bridge is exposed to stresses or torsional torques in the plane orthogonal to its height (i.e. the flow direction), the bridge may due to its relatively large height and small gauge tend to deform in that plane rather than in the flow or height direction. This advantageously allows for a device being less sensitive to thermally induced stresses and thermal expansion. Thereby a device having relatively well defined dimensions and a relatively reliable shape may be achieved. Furthermore, the deformation structure may allow materials having different coefficients of thermal expansion (CTE) to be combined. As an example, the first and/or the second electrodes may be formed of a material having a first CTE whereas the support structure, to which the first and/or the second electrodes may be attached, may have another CTE. In such case, a deformation structure may be provided in the electrodes and/or the support structure so as to enable any internal thermal stresses that may be caused by the difference in CTE to be absorbed by the deformation structure being deformed in the plane orthogonal to the direction of the fluid flow. Thus, the deformation structure may enable a more reliable device having a prolonged life.

According to an embodiment, the first electrode and/or the second electrode and/or the support structure is formed of a material that is selectively deposited so as to form the desired structure. The material may e.g. comprise a stacked structure of one or several metals. The depositing method may e.g. comprise molding, plating, screen printing, glazing, sputtering, evaporation or sintering.

Alternatively, or additionally, the manufacturing may comprise removal of material, e.g. by selectively removing material from a substrate. Examples of suitable techniques may include cutting, milling, etching, and abrasive blasting.

The first and/or second electrodes may advantageously comprise a material that has a relatively good ability of emitting electrons and is chemically stable, or inert, in relation to the pumped fluid. Further, the material may have a relatively high temperature resistance. Examples of such materials may include e.g. Pt, Au, and stainless steel.

According to an embodiment, the applied electric potential difference between the first and the second electrodes may be varied as a function of time. Experiments have shown that by e.g. alternating the potential difference between a first, positive value and zero, and/or between a positive and a negative value, the fluid flow per unit area, and hence the pump efficiency, may be improved.

Examples of fluids, i.e. liquids and gases, that can be pumped by means of embodiments of the inventions includes e.g. dielectrics such as acetone, alcohols, helium, nitrogen, and fluorocarbon-based fluids such as e.g. Fluorinert™ or Novec™.

In the present specification, the term "pump" or "pump assembly" may include any device capable of creating a movement, current or flow of a fluid within and/or through the device. The term may also be understood as a fan or fan assembly, in particular in case the fluid comprises a gaseous material.

Further objectives of, features of and advantages with the present invention will become apparent when studying the following detailed disclosure, the drawings and the appended claims. Those skilled in the art realise that different features of the present invention, even if recited in different claims, can be combined into embodiments other than those described in the following.

### Brief description of the drawings

The above, as well as additional objects, features and advantages of the present invention, will be better understood through the following illustrative and non-limiting detailed description of embodiments of the present invention. Reference will be made to the appended drawings, on which:
figure 1 is a schematic perspective view of a first and a second electrode according to an embodiment of the invention;
figures 2a-d show cross sectional portions of the first and second electrodes according to an embodiment of the invention, wherein the cross sections are taken along the flow direction;
figures 3a and b illustrate a device according to an embodiment of the invention;
figures 4a and b show a cross section according to an embodiment,
figures 5a and b are top views of an electrode provided with a deformation structure according to embodiments of the invention;
figure 6 is a cross section of an assembly, such as a pump assembly, according to an embodiment of the invention; and
figures 7a and b graphically illustrate electric current pulses applied to the emitter in accordance with an embodiment of the invention.

All the figures are schematic, generally not to scale, and generally only show parts which are necessary in order to elucidate the invention, whereas other parts may be omitted or merely suggested.

### Detailed description of embodiments

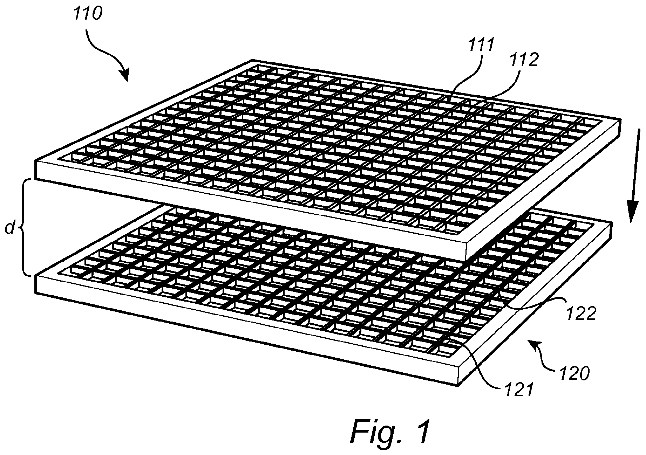

Figure 1 shows a first electrode, or emitter 110, comprising bridges 111 and joints 112 forming a grid that allows a fluid to flow through the emitter 110. The emitter 110 has a lateral extension in a plane perpendicular to the intended flow direction, which is indicated by an arrow in figure 1. According to this embodiment, the second electrode, or collector 120, comprises bridges 121 and joints 122 that are arranged in a similar grid the one described with reference to the emitter 110. Consequently, the collector 120 may have a lateral extension in a plane perpendicular to the direction of the flow such that both the emitter 110 and the collector 120 are parallel to each other.

The emitter 110 and the collector 120 may be arranged spaced apart from each other in the flow direction by a positive distance d. The spacing may e.g. be maintained by a support arrangement, or grid spacer 130 (not shown in figure 1) being arranged between the emitter 110 and the collector 120. A relatively narrow gap d may be desirable since such gap may provide a relatively high electric field and thus enhance the electrohydrodynamic effect affecting the flow rate. The use of a grid spacer 130, which may have a well defined thickness, may advantageously reduce the risk of a shortcut or breakdown between the emitter 110 and the collector 120. As will be discussed in more detail below, the grid spacer 130 may e.g. have a similar configuration as the emitter 110 and/or the collector 120, i.e. comprising a grid of bridges 111, 121 and joints 112, 122. The grid spacer 130 may however have other configurations as well, such as e.g. being formed as a frame supporting the lateral edges of the emitter 110 and/or collector 120.

It will also be realised that the grid may have one of a broad variety of shapes, wherein the edges and the joints e.g. may form a grating, a net, a hole pattern, a honeycomb structure, or other structures or patterns suitable for admitting a flow through the emitter 110 and/or collector 120.

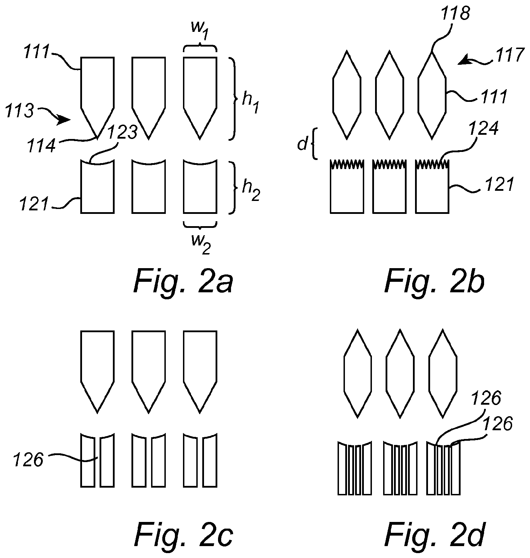

Figure 2 shows a cross section of a portion of the emitter 110 and collector 120 of the device, taken through three pairs of the bridges 111, 121 and along a plane parallel to the flow direction. According to this embodiment, the bridges 111 of the emitter 110 is arranged at a constant distance d from the bridges 121 of the collector 120, wherein the bridges 111 of the emitter have a maximum height h₁ in the flow direction and a maximum gauge w₁ in a direction orthogonal to the flow direction. As shown in figure 2, the maximum height h₁ is greater than the maximum gauge w₁ so as to enable a relatively stable and rigid grid structure that can carry a relatively large load in the flow direction without a risk of deforming or collapsing, and yet have a relatively large open area allowing the fluid flow. According to this embodiment, the collector 120 may have a similar relationship between the maximum height h₂ and the maximum gauge w₂ of the bridges 121. The ratio between the maximum height h₁, h₂ and the maximum gauge w₁, w₂ may e.g. be larger than 1, and more preferably larger than 2.

The cross section of the bridges 111 of the emitter 110 may comprise a downstream portion 113 having a tapered shape forming an edge or a point 114 facing the collector 120. The tapered shape may e.g. be manifested as an edge or narrow end 114 extending along the downstream portion 113 of the bridge 111, or one or several protrusions having a shape conforming to e.g. a tip, needle, pyramid, dome, etc. As the emitter 110 is subjected to an electric potential difference, there may be an electric field concentration at the edge 114 of the tapered portion 113 which may facilitate or promote emission of electrons.

Correspondingly, the portion of the bridges 121 of the collector 120 which face the emitter 110 may be provided with a dedicated shape or surface structure for enhancing collection of the emitted electrons. The bridges 121 and/or joints 122 of the collector 120 may e.g. be provided with a concave surface portion 123 increasing the surface area, and/or a structured surface comprising microscopic protrusions and/or recesses 124 increasing the active surface area. The structures 124 may e.g. be formed by molding, electroplating, surface treatment or by selectively adding and/or removing material by e.g. abrasive blasting, etching, milling, grinding, etc.

Figure 2a shows an example embodiment wherein the emitter 110 and the collector 120 are formed by screen printed Pt paste which has been sintered at about 800°C so as to form a grid of bridges having a maximum height h₁, h₂ of about 100-200 µm and a maximum gauge w₁, w₂ of about 50 µm. As shown in figure 2b, the collector 120 has been equipped with a micro-structured surface portion 124, facing the emitter 110, by means of micro-blasting, wherein the surface is bombarded with sharp, micrometer-sized particles so as to increase the area of the surface.

The devices 100 in figures 2b-d is similar to the device 100 described with reference to figure 2a. According to figure 2b, the emitter 110 is further provided with a tapered upstream portion 117, forming a relatively sharp edge 118 directed towards the fluid flow so as to reduce the flow resistance and hence enhance the flow through the emitter 110. As indicated in figures 2c and d, the collector 120 may further define channels 126 extending through the bridges 121 and/or the joints 122 (not shown) of the grid in order to decrease the flow resistance. The channels 126 may e.g. be effected by etching, such as e.g. reactive ion etching, wet etching, etc.

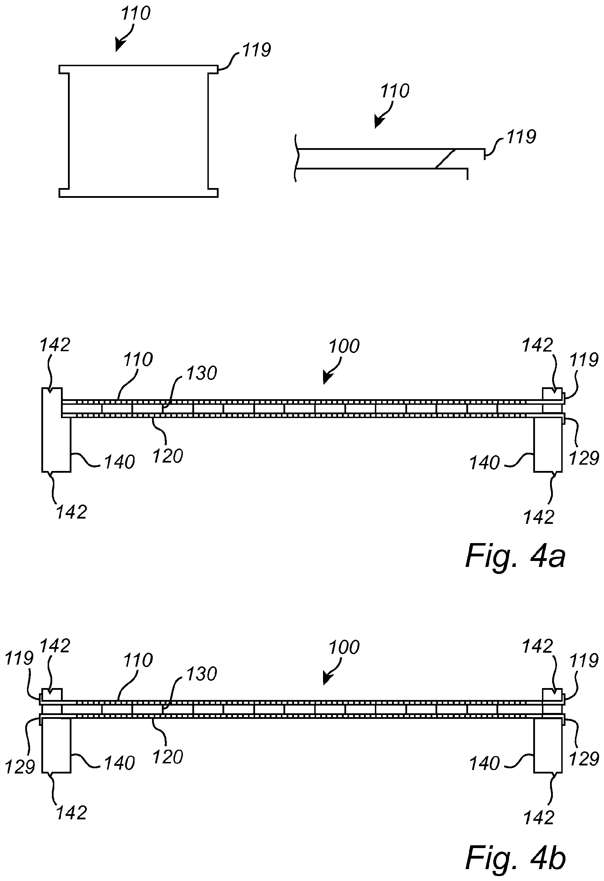

Figure 3a is a top view indicating the outline or contour of a first or second electrode, such as e.g. an emitter 110. As shown in figure 3a, the emitter 110 may comprise alignments structures 119, which also can be used as electric contact portions for enabling electric connection of the emitter 110. The electric contact portions 119 may e.g. comprise protrusions which are integrally formed with the emitter 110, and which may be adapted to engage with a corresponding structure of e.g. a support structure 130 and/or stacking structure 140 (not shown in figure 3a).

In figure 3b, a perspective view of a portion of an emitter 110 is shown, the emitter 110 being similar to the emitter 110 described with reference to figure 3a. According to figure 3b, the alignment structure 119 is bent to form a contact portion enabling electric connection of the emitter.

Even though the embodiments described with reference to figures 3a and b relates to an emitter 110, it will be appreciated that the same features and advantages e.g. may apply to a collector 120.

Figures 4a is a cross section of a device according to an embodiment of the invention. The device comprises a first electrode, or emitter 110, and a second electrode, or collector 120, which are arranged in a stacking structure 140. The emitter 110 and the collector 120 has a lateral extension in a plane perpendicular to the direction of the fluid flow, and are arranged spaced apart from each other by a support structure, or grid spacer 130. According to figure 4a, the emitter 110 and the collector 120 comprises a respective contact portion 119, 129 arranged at one of the sides of the device. The respective contact portions 119, 129 may formed as integrally formed protrusions of the electrodes and be adapted to engage with an edge of the stacking structure. The protruding contact portions 119, 129 may hence act as alignment structures during assemblage of the devices and/or enable electric contacting of the electrodes 110, 120.

The stacking structure 140 may comprise alignment structures 142 for facilitating alignment of the stacked devices 100. The alignment structures 142 of the stacking structure may 140 e.g. comprise a protruding portion adapted to fit into a recess of a corresponding alignment structure of a below device of the stack. Correspondingly, the alignment structure 140 may comprise a recess adapted to receive a protruding portion of a alignment structure of an above device in the same stack. Thereby the alignment of a stack of a plurality of devices 100 may be facilitated.

Figure 4b shows a similar device 100 as the one described with reference to figure 4a, wherein the emitter 110 and the collector 120 each have contacts portions 119, 129 arranged at both sides of the device. According to other embodiments, the contact portions 119, 129 may also be arranged such that the contact portions 119 of the emitter 110 are arranged at a side opposite to the side at which the contact portions 129 of the collector 120 are arranged. This advantageously allows the emitters 110 and collectors 120 to be electrically contacted at separate sides of the device 100, which may facilitate assemblage and handling of the devices 100 and/or pump assembly 200.

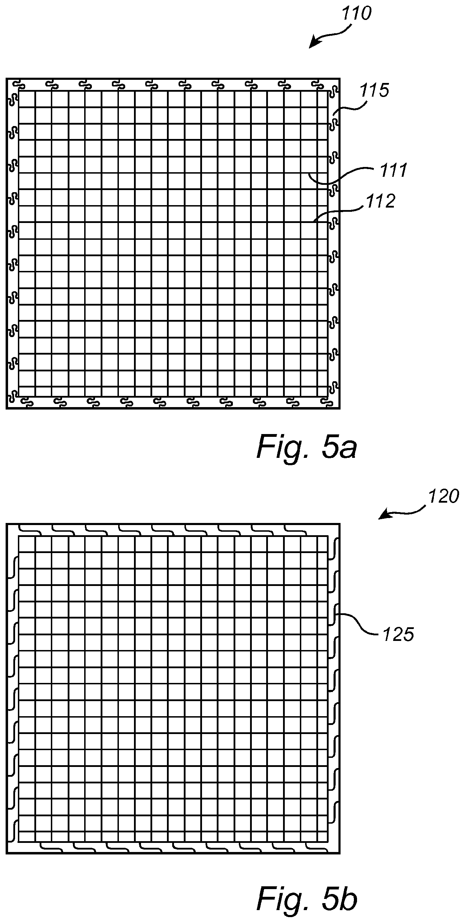

Figure 5a shows a deformation structure 115 of a grid acting as e.g. an emitter 110 in a device 100 according to embodiments of the present invention. The grid comprises bridges 111 and joints 112 in accordance with the previously described embodiments. As indicated in figure 5a, the deformation structure 115 is composed of bridges 111 that are curved in a plane normal to the flow direction. The curved shape may e.g. be formed during manufacturing of the bridges 111, or induced by e.g. thermal stresses occurring during use of the device 100. The curved shape may also comprise a weakened portion, e.g. a portion having a reduced gauge, so as to make it easier to deform upon heat induced stresses. As the material of the grid may expand with an increasing temperature, the bridges 111 of the deformation structure 126 may be compressed by compressive forces acting in the length direction of the bridges 111. By length direction should be understood the direction of extension between a first joint and a second joint. Thereby the lateral expansion of the grid may be absorbed by the deformation structure 115 and thermally induced stresses reduced so that the emitter 110 other than the deformation structure 115 may keep its original shape despite thermal expansion. It should however be understood that the forces acting on the bridges 111 of the deformation structure 115 also, or alternatively, may be caused by e.g. a torsional moment, or torque, acting on the structure.

Figure 5b shows a similar deformation structure 125 as described with reference to figure 5a, wherein the deformation structure 125 is formed of bridges 121 of a collector 120 of a device 100 according to an embodiment. It will however be understood that the device 100 may be provided with deformation structures 115, 125 arranged in any one, or several, of the emitter 110, the collector 120, and the support structure 130.

The deformation structure 115, 125 may be provided in an emitter 110 and/or collector 120 that is attached to a support structure 130, wherein in the support structure 130 may have a coefficient of thermal expansion (CTE) that differs from the CTE(s) of the emitter 110 and/or collector 120. In case the emitter 110 and/or collector 120 is/are rigidly attached to the support structure 130, the risk for deformations, such as e.g. bending and flexures, and damages such as fractures, disconnected or loosening joints etc. may be reduced by the deformation structure 115, 125. Thereby, reliability and useful life of the device 100 may be increased.

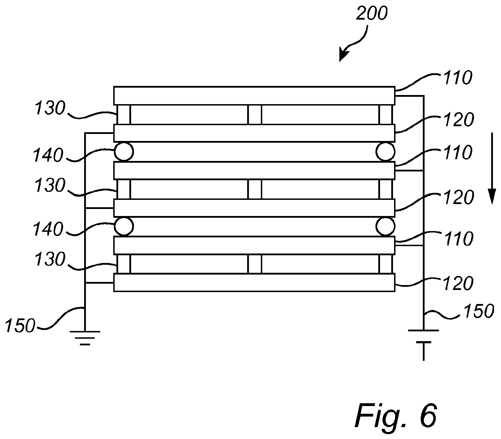

Figure 6 shows a cross section of an assembly, such as a pump assembly 200, comprising a stack of three devices 100 according to any one of the previously described embodiments. The cross section is taken along the direction of the flow (indicated by an arrow in figure 6) and across a respective bridge 111, 121 of the grids of the electrodes 110, 120. Each device comprises an electron emitting electrode (emitter) 110, an electron collecting electrode (collector) 120, and a grid spacer 130 arranged to separate the emitter 110 and the collector 120 in the direction of the flow. According to this embodiment, the emitters 110 and collectors 120 may comprise e.g. Pt, Au, or stainless steel forming e.g. the bulk material or a surface coating.

The grid spacer 130 may e.g. be formed as a grid supporting the emitter 110 and the collector 120. As illustrated in figure 6, the grid spacer 130 may comprise a peripheral frame of bridges to which the edge portions of the emitter 110 and the collector 120 are attached by e.g. welding, soldering or gluing. Alternatively, or additionally, the grid spacer 130 may comprise other spacing structures such as pillars or spacers, etc. The grid spacer 130 may also comprise one or several spacing members, such as e.g. additional bridges or pillars, supporting the centre portions of the emitter and collector. The grid spacer 130 may also comprise a deformation structure 115, 125 (not shown) similar to the deformation structure described with reference to figures 5a and b.

The spacing d of the emitter and collector may be determined by the height of the bridges of the grid spacer 130, which may hence determine the magnitude of the electric field induced between the emitter 110 and the collector 120. The distance d between the emitter 110 and the collector 120 may e.g. be within the range of 10 µm and 1000 µm.

Further, the grid spacer 130 may comprise an alignment structure for facilitating alignment of the emitter 110 and the collector 120, and/or alignment of the devices 100 of the stack.

The pump assembly 200 may also comprise a stacked structure with stage spacers 140 arranged to maintain a distance between the emitter 110 of a first device and the collector 120 of a second device. The stacking structure 140 may also comprise an alignment structure 142 (not shown in figure 6) for facilitating alignment and assemblage of the stacked devices 100, and possibly a deformation structure 115, 125 as described with reference to figures 5a and b in order to reduce any mechanical stresses between the components of the assembly 200.

The grid spacer 130 and/or the stacking structure 140 may e.g. comprise a ceramic material, such as Al₂O₃ or Macor™.

As shown in figure 6, the emitters 110 and the collectors 120 may be connected to an external voltage supply (not shown) by an electric connector or terminal 150. In this manner, an electric potential difference may be applied between the emitter 110 and collector 120 of the respective devices 100. The electric potential difference may induce an electric field which may promote the electron emission and impart movement of the fluid between and through each of the emitter 110 and collector 120. Further, the electric connection 150 between the emitters 110 and/or collectors 120 and the external power supply may be provided by mechanical features of the stacking structure and/or by electric contact portions 129 (not shown in figure 6). The mechanical features may e.g. be adapted so as to enable the electric connection to be formed by e.g. dispensing or screen printing, followed by e.g. sintering or welding. Advantageously, several or all of the emitters 110 and/or collectors 120 of the stack can be connected in the same manufacturing step.

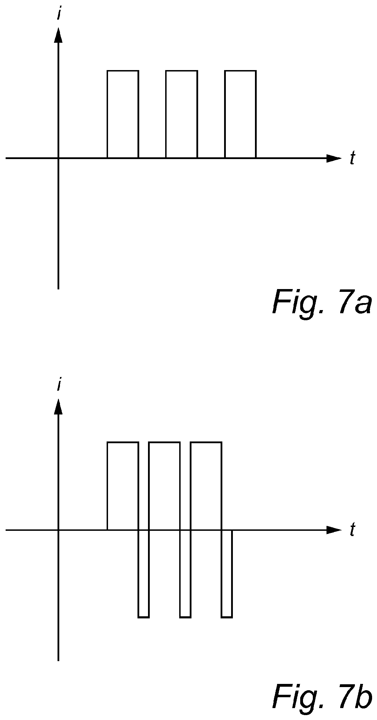

Figure 7a and b shows, as a function of time t, an electric current i provided to the emitter 110 of a device 100 according to the invention. In figure 7a, a positive current is applied and maintained for a first time period, and then removed. After a second time period the current supply is switched on again, thus forming a second pulse. Repeating this procedure can reduce the space charges that may be present in the fluid and may also allow any ionized particles to recombine.

To further improve relaxation, a pulse-reverse current may be introduced between the pulses described with reference to figure 7a. An example of such process is shown in figure 7b, wherein the positive pulses are separated by negative pulses. As shown in figure 7b, the negative pulses may have a larger absolute value than the positive pulses, but last for a shorter period of time so as to enable an overall positive flow. This procedure of separating the positive pulses by reverse pulses may advantageously improve relaxation, possibly to remove contaminants of the emitter 110 and/or collector 120.

From a design point of view, it is an advantage to confine charged particles, such as e.g. ions, between a portion of a bridge 111 and/or joint 112 of the emitter 110 and a corresponding portion of a bridge 121 and/or joint 122 of the collector 120. Outside this volume, i.e. between the open portions of the respective grid, the charged ions may have a limited effect on the pumping action. The time duration of the positive pulses may be selected such that negatively charged ions, created at the emitter, may just reach the collector 120. Hence, if the time duration is sufficiently short, the spreading of unwanted ions into the liquid loop may be limited. This time length can be calculated from the ion mobility, where a range from 2×10⁻⁸ to 2×10⁻⁷ m²/Vs is known form the prior art. For a pump having an electrode spacing of 100 µm, this may correspond to pulse duration of around 1 ms. The zero or negative pulse may advantageously be sufficiently long to allow recombination of ions or charged particles.

As outlined above, the method for controlling the flow of a fluid as illustrated by figures 6a and 6b may be embodied as computer-executable instructions distributed and used in the form of a computer-program product including a computer-readable medium storing such instructions. By way of example, computer-readable media may comprise computer storage media and communication media. As is well known to a person skilled in the art, computer storage media includes both volatile and non-volatile, removable and non-removable media implemented in any method or technology for storage of information such as computer readable instructions, data structures, program modules or other data. Computer storage media (or non-transitory media) includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices. Further, it is known to the skilled person that communication media (or transitory media) typically embodies computer readable instructions, data structures, program modules or other data in a modulated data signal such as a carrier wave or other transport mechanism and includes any information delivery media.

## Claims

1. A device (100) for controlling a flow of a fluid, comprising:
a first electrode (110); and
a second electrode (120) offset from the first electrode in a downstream direction of the flow, the electrodes being connectable to a voltage source; the device being **characterized in that**
the first electrode comprises a first set of bridges (111) in a first direction orthogonal to the direction of the flow, and a second set of bridges (111) in a second direction orthogonal to the direction of the flow, wherein the intersection of the first set of bridges and the second set of bridges at a plurality of joints (112) forms a grid structure, which is arranged to allow the fluid to flow through the first electrode; and
at least a portion of the bridges of the first set and second set of bridges has a maximum height (h₁) in a direction parallel to a direction of the flow and a maximum gauge (w₁) in a direction orthogonal to the direction of the flow, wherein said maximum height is larger than said maximum gauge.

2. The device according to claim 1, wherein at least one of the bridges of the first set and the second set of the bridges has a portion with a substantially uniform cross section and comprises a tapered portion (113) having a cross section forming an edge and/or tip (114) facing the second electrode.

3. The device according to claim 1 or 2, wherein at least one of the bridges of the first set and the second set of the bridges comprises a tapered portion (117) having a cross section forming an edge and/or tip (118) facing away from the second electrode.

4. The device according to any one of the preceding claims, wherein:
the second electrode comprises bridges (121) and joints (122) forming a grid structure, which is arranged to allow the fluid to flow through the second electrode, and a least a portion of at least one of the bridges has a maximum height (h₂) in a direction parallel to the direction of the flow and a maximum gauge (w₂) in a direction orthogonal to the direction of the flow, wherein said maximum height is larger than said maximum gauge.

5. The device according to claim 4, wherein the second electrode comprises a surface portion facing the first electrode and being provided with microstructures (124) for increasing the area of the surface portion.

6. The device according to claim 4 or 5, wherein the second electrode comprises a concave surface portion (123) facing the first electrode.

7. The device according to any one of claims 4 to 6, wherein at least one of the bridges and/or joints of the second electrode comprise a channel (126) adapted to allow the fluid to flow through said channel.

8. The device according to any one of the preceding claims, further comprising a support structure (130) separating the second electrode from the first electrode in the direction of the flow.

9. The device according to any one of the preceding claims, wherein at least one of the first electrode, the second electrode and the support structure comprises a deformation structure (115, 125) arranged to deform in a plane orthogonal to the direction of the flow to absorb thermally induced stress in the first electrode, the second electrode or the support structure, respectively.

10. The device according to claim 9, wherein said structure is formed of at least one of the bridges being curved in the plane orthogonal to the direction of the flow.

11. An assembly (200) comprising a plurality of stacked devices (100) according to any one of the preceding claims, further comprising a stacking structure (140) adapted to align the devices with each other and to separate the devices from each other in the direction of the flow.

12. A method for manufacturing a device for controlling a flow of a fluid, comprising:
providing a first electrode (110) and a second electrode (120), and
arranging the second electrode offset from the first electrode in the direction of the flow.
the method being **characterized in that** the step of providing the first electrode comprises
providing the first electrode (110) comprising a first set of bridges (111) in a first direction orthogonal to the direction of the flow, and a second set of bridges (111) in a second direction orthogonal to the direction of the flow, wherein the intersection of the first set of bridges and the second set of bridges at a plurality of joints (112) forms a grid structure arranged to allow the fluid to flow through the first electrode, wherein at least a portion of the bridges of the first set and second set of bridges has a maximum height (h₁) in a direction parallel to the direction of the flow and a maximum gauge (w₁) in a direction orthogonal to the direction of the flow, and wherein said maximum height is larger than said maximum gauge.

13. The method according to claim 12, wherein the step of arranging the second electrode comprises arranging a support structure (130) arranged in between the first electrode and the second electrode.

14. A method for controlling the flow of a fluid, comprising:
providing a device (100) according to any one of claims 1 to 10;
providing a fluid contacting the first electrode (110) of the device; and
applying an electric potential difference between the first electrode and the second electrode (120).

15. The method according to claim 14, further comprising the step of varying the electric potential difference as a function of time.

## Patentansprüche

1. Vorrichtung (100) zur Steuerung eines Flusses eines Fluids, umfassend:
eine erste Elektrode (110); und
eine zweite Elektrode (120), die in einer stromabwärtigen Richtung des Flusses von der ersten Elektrode versetzt ist, wobei die Elektroden mit einer Spannungsquelle verbindbar sind; wobei die Vorrichtung **dadurch gekennzeichnet ist, dass**
die erste Elektrode einen ersten Satz von Brücken (111) in einer ersten Richtung orthogonal zu der Richtung des Flusses und einen zweiten Satz von Brücken (111) in einer zweiten Richtung orthogonal zu der Richtung des Flusses umfasst, wobei die Kreuzung des ersten Satzes von Brücken und des zweiten Satzes von Brücken an einer Mehrzahl von Verbindungen (112) eine Gitterstruktur bildet, die angeordnet ist, dem Fluid zu erlauben, durch die erste Elektrode zu fließen; und
mindestens ein Abschnitt der Brücken des ersten Satzes und zweiten Satzes von Brücken eine maximale Höhe (h₁) in einer Richtung parallel zu einer Richtung des Flusses und eine maximale Breite (w₁) in einer Richtung orthogonal zu der Richtung des Flusses aufweist, wobei die maximale Höhe größer als die maximale Breite ist.

2. Vorrichtung nach Anspruch 1, wobei mindestens eine der Brücken des ersten Satzes und des zweiten Satzes der Brücken einen Abschnitt mit einem im Wesentlichen einheitlichen Querschnitt aufweist und einen spitz zulaufenden Abschnitt (113) mit einem Querschnitt umfasst, der eine Kante und/oder Spitze (114) bildet, die der zweiten Elektrode zugewandt ist.

3. Vorrichtung nach Anspruch 1 oder 2, wobei mindestens eine der Brücken des ersten Satzes und des zweiten Satzes der Brücken einen spitz zulaufenden Abschnitt (117) umfasst, der einen Querschnitt aufweist, der eine Kante und/oder Spitze (118) bildet, die von der zweiten Elektrode abgewandt ist.

4. Vorrichtung nach einem der vorhergehenden Ansprüche, wobei:
die zweite Elektrode Brücken (121) und Verbindungen (122) umfasst, die eine Gitterstruktur bilden, die angeordnet ist, dem Fluid zu erlauben, durch die zweite Elektrode zu fließen, und mindestens ein Abschnitt mindestens einer der Brücken eine maximale Höhe (h₂) in einer Richtung parallel zu der Richtung des Flusses und eine maximale Breite (w₂) in einer Richtung orthogonal zu der Richtung des Flusses aufweist, wobei die maximale Höhe größer als die maximale Breite ist.

5. Vorrichtung nach Anspruch 4, wobei die zweite Elektrode einen Oberflächenabschnitt umfasst, der der ersten Elektrode zugewandt ist und mit Mikrostrukturen (124) zur Vergrößerung der Fläche des Oberflächenabschnitts versehen ist.

6. Vorrichtung nach Anspruch 4 oder 5, wobei die zweite Elektrode einen konkaven Oberflächenabschnitt (123) umfasst, der der ersten Elektrode zugewandt ist.

7. Vorrichtung nach einem der Ansprüche 4 bis 6, wobei mindestens eine der Brücken und/oder Verbindungen der zweiten Elektrode einen Kanal (126) umfasst, der angepasst ist, dem Fluid zu erlauben, durch den Kanal zu fließen.

8. Vorrichtung nach einem der vorhergehenden Ansprüche, ferner umfassend eine erste Tragstruktur (130), die die zweite Elektrode von der ersten Elektrode in der Richtung des Flusses trennt.

9. Vorrichtung nach einem der vorhergehenden Ansprüche, wobei mindestens eine von der ersten Elektrode, der zweiten Elektrode und der Tragstruktur eine Verformungsstruktur (115, 125) umfasst, die angeordnet ist, sich in einer Ebene orthogonal zu der Richtung des Flusses zu verformen, um eine thermisch induzierte Spannung in der ersten Elektrode, der zweiten Elektrode bzw. der Tragstruktur aufzunehmen.

10. Vorrichtung nach Anspruch 9, wobei die Struktur von mindestens einer von den Brücken gebildet ist, die in der Ebene orthogonal zu der Richtung des Flusses gekrümmt sind.

11. Anordnung (200) umfassend eine Mehrzahl von gestapelten Vorrichtungen (100) nach einem der vorhergehenden Ansprüche, ferner umfassend eine Stapelungsstruktur (140), die angepasst ist, die Vorrichtungen miteinander auszurichten und die Vorrichtungen in der Richtung des Flusses voneinander zu trennen.

12. Verfahren zur Herstellung einer Vorrichtung zur Steuerung eines Flusses eines Fluids, umfassend:
Bereitstellen einer ersten Elektrode (110) und einer zweiten Elektrode (120) und Anordnen der zweiten Elektrode versetzt von der ersten Elektrode in der Richtung des Flusses.
wobei das Verfahren **dadurch gekennzeichnet ist, dass** der Schritt des Bereitstellens der ersten Elektrode Folgendes umfasst:
Bereitstellen der ersten Elektrode (110) umfassend einen ersten Satz von Brücken (111) in einer ersten Richtung orthogonal zu der Richtung des Flusses und einen zweiten Satz von Brücken (111) in einer zweiten Richtung orthogonal zu der Richtung des Flusses, wobei die Kreuzung des ersten Satzes von Brücken und des zweiten Satzes von Brücken an einer Mehrzahl von Verbindungen (112) eine Gitterstruktur bildet, die angeordnet ist, dem Fluid zu erlauben, durch die erste Elektrode zu fließen, wobei mindestens ein Abschnitt der Brücken des ersten Satzes und zweiten Satzes von Brücken eine maximale Höhe (h₁) in einer Richtung parallel zu der Richtung des Flusses und eine maximale Breite (w₁) in einer Richtung orthogonal zu der Richtung des Flusses aufweist, und wobei die maximale Höhe größer als die maximale Breite ist.

13. Verfahren nach Anspruch 12, wobei der Schritt des Anordnens der zweiten Elektrode Anordnen einer Tragstruktur (130) umfasst, die zwischen der ersten Elektrode und der zweiten Elektrode angeordnet ist.

14. Verfahren zur Steuerung des Flusses eines Fluids, umfassend:
Bereitstellen einer Vorrichtung (100) nach einem der Ansprüche 1 bis 10;
Bereitstellen eines Fluids, das mit der ersten Elektrode (110) der Vorrichtung in Kontakt steht; und
Anlegen einer elektrischen Potentialdifferenz zwischen der ersten Elektrode und der zweiten Elektrode (120).

15. Verfahren nach Anspruch 14, ferner umfassend den Schritt des Variierens der elektrischen Potentialdifferenz in Abhängigkeit von der Zeit.

## Revendications

1. Dispositif (100) de contrôle d'un écoulement de fluide, comprenant :
une première électrode (110) ; et
une deuxième électrode (120) décalée par rapport à la première électrode en direction aval de l'écoulement, les électrodes étant connectables à une source de tension ; le dispositif étant **caractérisé en ce que**
la première électrode comprend un premier ensemble de ponts (111) dans une première direction orthogonale à la direction de l'écoulement, et un deuxième ensemble de ponts (111) dans une deuxième direction orthogonale à la direction de l'écoulement, dans lequel l'intersection du premier ensemble de ponts et du deuxième ensemble de ponts à une pluralité de jointures (112) forme une structure de grille, qui est agencée pour permettre au fluide de s'écouler à travers la première électrode ; et
au moins une portion des ponts des premier et deuxième ensembles de ponts présente une hauteur maximale (h₁) dans une direction parallèle à une direction de l'écoulement et un écartement maximum (w₁) dans une direction orthogonale à la direction de l'écoulement, dans lequel ladite hauteur maximale est supérieure audit écartement maximum.

2. Dispositif selon la revendication 1, dans lequel au moins un des ponts des premier et deuxième ensembles de ponts présente une portion à section transversale substantiellement uniforme et comprend une portion effilée (113) présentant une section transversale qui forme un bord et/ou une pointe (114) qui fait face à la deuxième électrode.

3. Dispositif selon la revendication 1 ou 2, dans lequel au moins un des ponts des premier et deuxième ensembles de ponts comprend une portion effilée (117) qui présente une section transversale formant un bord et/ou une pointe (118) opposée à la deuxième électrode.

4. Dispositif selon l'une quelconque des revendications précédentes, dans lequel :
la deuxième électrode comprend des ponts (121) et des jointures (122) formant une structure de grille, qui est agencée pour permettre au fluide de s'écouler à travers la deuxième électrode, et au moins une portion d'au moins un des ponts présente une hauteur maximale (h₂) dans une direction parallèle à la direction de l'écoulement et un écartement maximum (w₂) dans une direction orthogonale à la direction de l'écoulement, dans lequel ladite hauteur maximale est supérieure audit écartement maximum.

5. Dispositif selon la revendication 4, dans lequel la deuxième électrode comprend une portion de surface qui fait face à la première électrode et pourvue de microstructures (124) pour augmenter la surface de la portion de surface.

6. Dispositif selon la revendication 4 ou 5, dans lequel la deuxième électrode comprend une portion de surface concave (123) qui fait face à la première électrode.

7. Dispositif selon l'une quelconque des revendications 4 à 6, dans lequel au moins un élément parmi les ponts et/ou les jointures de la deuxième électrode comprend un canal (126) adapté pour permettre au fluide de s'écouler à travers ledit canal.

8. Dispositif selon l'une quelconque des revendications précédentes, comprenant en outre une structure de support (130) qui sépare la deuxième électrode de la première électrode en direction de l'écoulement.

9. Dispositif selon l'une quelconque des revendications précédentes, dans lequel au moins un élément parmi la première électrode, la deuxième électrode et la structure de support comprend une structure de déformation (115, 125) agencée pour se déformer dans un plan orthogonal à la direction de l'écoulement pour absorber les contraintes thermiques dans respectivement la première électrode, la deuxième électrode ou la structure de support.

10. Dispositif selon la revendication 9, dans lequel ladite structure est constituée d'au moins un des ponts incurvé dans le plan orthogonal à la direction de l'écoulement.

11. Assemblage (200) comprenant une pluralité de dispositifs empilés (100) selon l'une quelconque des revendications précédentes, comprenant en outre une structure d'empilement (140) adaptée pour aligner les dispositifs entre eux et pour séparer les dispositifs les uns des autres dans la direction de l'écoulement.

12. Procédé de fabrication d'un dispositif pour contrôler un écoulement de fluide, comprenant :
la fourniture d'une première électrode (110) et d'une deuxième électrode (120), et l'agencement décalé de la deuxième électrode par rapport à la première électrode dans la direction de l'écoulement,
le procédé étant **caractérisé en ce que** l'étape de fourniture de la première électrode comprend
la fourniture de la première électrode (110) qui comporte un premier ensemble de ponts (111) dans une première direction orthogonale à la direction de l'écoulement et un deuxième ensemble de ponts (111) dans une deuxième direction orthogonale à la direction de l'écoulement, dans lequel l'intersection du premier ensemble de ponts et du deuxième ensemble de ponts à une pluralité de jointures (112) forme une structure de grille agencée pour permettre au fluide de s'écouler à travers la première électrode, dans lequel au moins une portion des ponts des premier et deuxième ensembles de ponts présente une hauteur maximale (h₁) dans une direction parallèle à la direction de l'écoulement et un écartement maximum (w₁) dans une direction orthogonale à la direction de l'écoulement, et dans lequel ladite hauteur maximale est supérieure audit écartement maximum.

13. Procédé selon la revendication 12, dans lequel l'étape d'agencement de la deuxième électrode comprend l'agencement d'une structure de support (130) agencée entre la première électrode et la deuxième électrode.

14. Procédé pour contrôler l'écoulement de fluide, comprenant :
la fourniture d'un dispositif (100) selon l'une quelconque des revendications 1 à 10 ;
la fourniture d'un fluide en contact avec la première électrode (110) du dispositif ; et
l'application d'une différence de potentiel électrique entre la première électrode et la deuxième électrode (120).

15. Procédé selon la revendication 14, comprenant en outre l'étape de variation de la différence de potentiel électrique en fonction du temps.
